Europäisches Patentamt

(19) European Patent Office

Office européen des brevets

(11) Publication number: 0 127 944

A2

(12) EUROPEAN PATENT APPLICATION

(21) Application number: 84302936.4

(22) Date of filing: 01.05.84

(51) Int. Cl.³: A 01 N 57/12
A 01 N 43/64
//(A01N57/12, 43/64, 43/40, 33/12), (A01N43/64, 43/40, 33/12)

(30) Priority: 02.05.83 JP 77817/83

(43) Date of publication of application:
12.12.84 Bulletin 84/50

(84) Designated Contracting States:
BE CH DE FR GB IT LI NL

(71) Applicant: SUMITOMO CHEMICAL COMPANY, LIMITED
15 Kitahama 5-chome Higashi-ku
Osaka-shi Osaka 541(JP)

(72) Inventor: Izumi, Kazuo
14-7, Mefu-2-chome
Takarazuka-shi(JP)

(72) Inventor: Oshio, Hiromichi
14-12, Tokiwadai-6-chome Toyonocho
Toyonogun Osaku-fu(JP)

(74) Representative: Goldin, Douglas Michael et al,
J.A. KEMP & CO. 14, South Square Gray's Inn
London WC1R 5EU(GB)

(54) A plant growth regulating composition.

(57) A composition for regulating the growth of plants which comprises as active ingredients an effective amount of (E)-1-(4-chlorophenyl)-4, 4-dimethyl-2- (1,2,4-triazol-1-yl)-1-pentene-3-ol and one or more compounds selected from the group consisting of (2-chloroethyl)-phosphonic acid, 1,1-dimethylpiperidium chloride and (2-chloroehtyl) trimethyl-ammonium chloride, and an inert carrier.

EP 0 127 944 A2

# A PLANT GROWTH REGULATING COMPOSITION

The present invention relates to a composition for regulating the growth of plants which comprises as active ingredients (E)-1-(4-chlorophenyl)-4,4-dimethyl-2-(1,2,4-triazol-1-yl)-1-pentene-3-ol (hereinafter referred to as compound A) and one or more compounds selected from the group consisting of (2-chloroethyl)-phosphonic acid (hereinafter referred to as ethephone), 1,1-dimethylpiperidium chloride (hereinafter referred to as mepiquat-chloride) and (2-chloroethyl)trimethylammonium chloride (hereinafter referred to as chlormequat-chloride), and an inert carrier.

In the management of crop cultivation, lodging of crops by wind and rain is a serious problem, and the yield of crops markedly lowers by the lodging.

Previously, the present inventors extensively studied on plant growth regulating agents to reduce this lodging, and as a result, found that the compound A will reduce the lodging of crops to a large extent by controlling crops' height (GB 2046260B). By the subsequent further extensive study, the present inventors found that, when the compositions of the present invention containing as active ingredients the compound A and one or more compounds selected from ethephone, mepiquat-chloride and chlormequat-chloride is used as a plant growth regulating agent, a height controlling activity synergistically increases as compared with a single use of these compounds.

Chlormequat-chloride is already in use as a lodging-preventing agent for wheat (refer to W.T. Thomson : Agricultural Chemicals III, pp. 51-52), mepiquat-chloride as a lodging-preventing and yield-increasing agent for cotton (refer to W.T. Thomson : Agrigultural Chemicals III, p. 66), and ethephone is known as a lodging-preventing agent for barley (refer to British Crop Protection Conference, Vol. 2, 1980).

The mixing ratio of the compound A to one or more compounds selected from mepiquat-chloride, chlormequat-chloride and ethephone, all these compounds being the active ingredient of the compositions of the present invention, may be changed over a relatively wide range, but generally, it is 1 to 0.1-200, preferably 1 to 0.5-40 by part by weight.

The compositions of the present invention can be used in preventing the lodging of cereals (e.g. rice plant, wheat, barley, rye) and crops (e.g. soybean, cotton) and controlling the height thereof. Also, they can be used in regulating the growth of turfs and the succulent shoots of fruit trees, dwarfing ornamental plants for the purpose of increasing the commercial value, regulating the growth of hedges, regulating a flowering stage, and the like.

In the practical use of the compositions of the present invention, they are generally formulated into preparation forms such as emulsifiable concentrates, wettable powders, liquid formulations, suspension concentrates, granules, etc. by mixing with an inert carrier such as solid or liquid carrier, surface active agent or other auxiliaries. These compositions contain as active ingredients the compound A and one or more compounds selected from ethephone, mepiquat-chloride and chlormequat-chloride in an amount of 0.05 to 95%, preferably 0.1 to 80% by weight.

The solid carrier includes for example fine powders or granules of kaolin clay, attapulgite clay, bentonite, fuller's earth pyrophyllite, talc, diatomaceous earth, calcite, walnut powder, urea, ammonium sulfate, synthetic hydrated silicon dioxide and the like. The liquid carrier includes for example aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton seed oil), dimethyl sulfoxide, acetonitrile, water and the like.

The surface active agent used for emulsification, dispersion, wetting, etc. includes for example anionic surface active agents such as salts of alkyl sulfate, alkyl(aryl)sulfonates, dialkyl sulfosuccinates, salts of polyoxyethylene alkylaryl ether phosphoric acid esters, etc., and nonionic ones such as polyoxyethylene alkyl ether, polyoxyethylene alkylaryl ether, polyoxyethylene polyoxypropylene block copolymers, sorbitan fatty acid esters, polyoxyethylene sorbitan fatty acid ester, etc.  The auxiliaries include for example lignosulfonates, alginates, polyvinyl alcohol, gum arabic, CMC (carboxymethyl cellulose), PAP (isopropyl acid phosphate) and the like.

Preparation examples for the composition of the present invention will be shown.  In the examples, all parts are by weight.

Preparation example 1

10 Parts of the compound A, 10 parts of chlormequat-chloride, 3 parts of calcium lignosulfonate, 2 parts of sodium lauryl sulfate and 75 parts of synthetic hydrated silicon dioxide are thoroughly pulverized and mixed together to obtain a wettable powder.

Preparation example 2

10 Parts of the compound A, 20 parts of chlormequat-chloride, 14 parts of polyoxyethylene styrylphenyl ether, 6 parts of clacium dodecylbenzenesulfonate and 50 parts of xylene are thoroughly mixed together to obtain an emulsifiable concentrate.

Preparation example 3

5 Parts of the compound A, 10 parts of chlormequat-chloride, 1 part of synthetic hydrated silicon dioxide, 2 parts of calcium lignosulfonate, 30 parts of bentonite and 52 parts of kaolin clay are thoroughly pulverized and mixed together, well kneaded with water, granulated and then dried to obtain a granule.

Preparation example 4

10 Parts of the compound A, 10 parts of mepiquat-chloride, 3 parts of polyoxyethylene sorbitan monooleate, 3 parts of CMC and 74 parts of water are mixed and wet-pulverized until the particle size is reduced to not more than 5 microns to obtain a suspension concentrate.

Preparation example 5

5 Parts of the compound A, 10 parts of ethephone, 1 part of polyoxyethylene styrylphenyl ether and 84 parts of water are mixed to obtain a liquid formulation.

Preparation example 6

5 Parts of the compound A, 5 parts of chlormequat-chloride, 10 parts of mepiquat-chloride, 3 parts of calcium lignosulfonate, 2 parts of sodium lauryl sulfate and 75 parts of synthetic hydrated silicon dioxide are thoroughly pulverized and mixed together to obtain a wettable powder.

Preparation example 7

One part of the compound A, 10 parts of ethephone, 10 parts of chlormequat-chloride, 10 parts of mepiquat-chloride, 1 part of polyoxyethylene styrylphenyl ether and 68 parts of water are mixed to obtain a liquid formulation.

These compositions, either as such or in dilution with water, etc., are used in foliar treatment or soil treatment. In the case of soil treatment, they are sprayed onto soil surface (as need arises, they are mixed with the soil after spraying), or the soil is drenched with them. Also, an increase in their activity can be expected by using them in mixtures with other plant growth regulating agents. Further, they may also be used in mixtures with other insecticides, acaricides, nematocides, fungicides, herbicides, fertilizers, soil improvers and the like.

The dosage rate of the active ingredient in the compositions of the present invention varies with weather conditions, soil conditions, preparation forms, the mixing ratio of active ingredient, the kind of intended crops and the like. Generally, however, the total amount of the compound A and one or more compounds selected from mepiquat-chloride, ethephone and chlormequat-chloride is 0.05 to 50 g, preferably 0.1 to 20 g per are. The emulsifiable concentrate, wettable powder, liquid formulation, suspension concentrate, etc. are applied in dilution with water of 1 to 40 liters per are (if necessary, auxiliaries for spraying such as a spreading agent, etc. may previously be added to the water), and the granules, etc. are applied as they are without dilution.

The spreading agent includes for example, in addition to the foregoing surface active agents, polyoxyethylene resin acids (ester), lignosulfonates, abietates, dinaphthylmethanedisulfonates, paraffins and the like.

The plant growth regulating activity of the compositions of the present invention will be illustrated specifically with reference to the following test examples.

Test example 1  Height controlling test for wheat

Sandy loam was filled in 500-ml plastic pots, and wheat was sowed at a rate of five seeds per pot and cultivated in a glass room. At the point when the wheat grew to the two-leaf stage after 14 days, the wettable powder obtained according to Preparation example 1 was diluted with water to the prescribed concentration of the active ingredient and foliar-applied at a rate of 5 ml per pot. After the application, the wheat plants were cultivated for further two weeks, and their height was measured. The test was carried out using two pots per plot. The result is shown in Table 1. The values in the table are the average height value of ten wheat plants expressed by index (%) with the value in the untreated plot as 100.

Table 1

| | Concentration of the active ingredient (ppm) | Compound A | | | |
|---|---|---|---|---|---|
| | | 20 | 15 | 5 | 0 |
| Ethephone | 2000 | 78 | 82 | 88 | 90 |
| | 1000 | 82 | 85 | 90 | 96 |
| | 500 | 84 | 89 | 92 | 97 |
| Mepiquat-chloride | 4000 | 76 | 82 | 86 | 89 |
| | 2000 | 83 | 87 | 89 | 96 |
| | 1000 | 85 | 89 | 91 | 98 |
| Chlormequat-chloride | 4000 | 72 | 78 | 82 | 87 |
| | 2000 | 78 | 82 | 85 | 94 |
| | 1000 | 80 | 89 | 90 | 97 |
| - | 0 | 90 | 95 | 98 | 100 |

Test example 2   Height controlling test for cotton

Sandy loam was filled in 1/5000 are Wagner's pots, and cotton was sowed at a rate of two seeds per pot and cultivated in a glass room.  At the point when the cotton plants grew to the first leaf stage after three weeks, the wettable powder obtained according to Preparation example 1 was diluted with water to the prescribed concentration of the active ingredient and applied to the plants.  After the application, the cotton plants were cultivated for further one month, and their height was measured.  The test was carried out using three pots per plot.  The result is shown in Table 2. The values in the table are the average height value of six cotton plants expressed by index (%) with the value in the untreated plot as 100.

Table 2

| | Concentration of the active ingredient (ppm) | Compound A | | | |
|---|---|---|---|---|---|
| | | 80 | 40 | 20 | 0 |
| Mepiquat-chloride | 400 | 64 | 70 | 82 | 90 |
| | 200 | 69 | 74 | 87 | 93 |
| | 100 | 73 | 80 | 90 | 96 |
| | 0 | 82 | 86 | 98 | 100 |

## CLAIMS

1. A composition for regulating the growth of plants which comprises as active ingredients an effective amount of (E)-1-(4-chlorophenyl)-4,4-dimethyl-2-(1,2,4-triazol-1-yl)-1-pentene-3-ol and one or more compounds selected from the group consisting of (2-chloroethyl)-phosphonic acid, 1,1-dimethylpiperidium chloride and (2-chloroethyl)trimethylammonium chloride, and an inert carrier.

2. The composition according to Claim 1, wherein the amount of one or more compounds selected from the group consisting of (2-chloroethyl)phosphonic acid, 1,1-dimethylpiperidium chloride and (2-chloroehtyl)-trimethylammonium chloride is 0.1 to 200 parts by weight based on 1 part by weight of (E)-1-(4-chlorophenyl)-4,4-dimethyl-2-(1,2,4-triazol-1-yl)-1-pentene-3-ol.

3. The composition according to Claim 1 or 2 containing as active ingredients (E)-1-(4-chlorophenyl)-4,4-dimethyl-2-(1,2,4-triazol-1-yl)-1-pentene-3-ol and (2-chloroethyl)phosphonic acid.

4. The composition according to Claim 1 or 2 containing as active ingredients (E)-1-(4-chlorophenyl)-4,4-dimethyl-2-(1,2,4-triazol-1-yl)-1-pentene-3-ol and 1,1-dimethylpiperidium chloride.

5. The composition according to Claim 1 or 2 containing as active ingredients (E)-1-(4-chlorophenyl)-4,4-dimethyl-2-(1,2,4-triazol-1-yl)-1-pentene-3-ol and (2-chloroethyl)trimethylammonium chloride.

6.      A method for regulating the growth of plants which comprises applying a regulatorily effective amount of the composition according to any one of Claims 1 to 5, to the plants or their environment.

7.      Use of a composition according to any one of Claims 1 to 5 for regulating the growth of plants.